# EUROPEAN PATENT SPECIFICATION

(11) **EP 4 004 140 B1**
(45) Date of publication and mention of the grant of the patent: **17.07.2024**
(21) Application number: 20764446.9
(22) Date of filing: 28.07.2020
(51) Int. Cl.: C09K 5/06, F28D 20/02, H02K 5/20, H02K 9/22

(54) **MIXTURE OF PCM WAXES AS AN ELEMENT FOR ACCUMULATING LATENT HEAT IN ELECTRIC MACHINES**
MISCHUNG VON PCM-WACHSEN ALS ELEMENT ZUR SPEICHERUNG VON LATENTER WÄRME IN ELEKTRISCHEN MASCHINEN
MÉLANGE DE CIRES DE MCP EN TANT QU'ÉLÉMENT PERMETTANT D'ACCUMULER LA CHALEUR LATENTE DANS DES MACHINES ÉLECTRIQUES

(30) Priority: 29.07.2019 IT 201900013161
(43) Date of publication of application: 01.06.2022
(73) Proprietor: Eldor Corporation S.p.A., 22030 Orsenigo (Como) (IT)
(72) Inventor: PENNATI, Simone, 22030 Orsenigo (Como) (IT); REDAELLI, Edoardo Carlo, 22030 Orsenigo (Como) (IT); FORTE, Pasquale, 22030 Orsenigo (Como) (IT); GARIBOLDI, Elisabetta, 20133 Milano (IT); VEDANI, Maurizio, 20133 Milano (IT)
(74) Representative: Biggi, Cristina
(86) International application number: PCT/IB2020/057104
(87) International publication number: WO 2021/019438

(56) References cited:
- WO-A1-2016/153959
- DE-A1- 102012 020 958
- FR-A1- 2 942 310
- US-A1- 2008 319 126
- US-A1- 2013 283 827
- US-A1- 2015 034 528

## Description

### FIELD OF THE INVENTION

The present invention relates to the use of a composition comprising a mixture of at least two waxes belonging to the class of phase change materials (PCM) as an element for accumulating latent heat in an electric machine, preferably for *automotive* use, a method for producing a hollow cooling casing containing said composition and a method for cooling said electric machine which comprises the use of said hollow cooling casing.

### BACKGROUND OF THE INVENTION

In recent years, in the mobility sector, in particular the sector of sustainable mobility for *automotive* use, there has been an increasingly felt need to provide high-performance electric vehicles.

The need to obtain high performances produces high stresses for the electric traction units of vehicles, since in such applications electric motors are generally subject to performance imbalances, which result in a very irregular pattern in the temperature profiles of the machines, a pattern characterised by rapid transients both in heating and in cooling.

Therefore, in this case, electric motors, too, require the adoption of specific cooling systems for accumulating the excess heat produced which, notwithstanding the obvious temperature differences in play, recall those used for internal combustion engines (endothermic engines).

In the sector there is thus a growing demand for the provision of systems that enable the irregular pattern in the temperature profiles of high-performance electric vehicles to be managed, thus avoiding declines in performance, malfunctions or failures.

For example, there are known systems in which a metal casing, typically made of aluminium, is placed around the stator of the electric machine and passed through internally by a liquid cooling conduit. Such a liquid cooling system is certainly functional for endothermic engines, in which the temperature transients are usually very slow, but is hardly suitable for regulating the temperature of an electric machine, for example in high-performance automotive applications, in which the temperature transients, as said, are generally short and very rapid and characterised by major peaks and fluctuations. Furthermore, the placement of channels circulating refrigerant liquid around an electric machine brings with it problems related to size, safety and consumption/emissions, a reason why the market demands an increasing limitation of them.

Alternative solutions have thus been devised which may enable an effective accumulation of heat (thermal accumulation) and, therefore, good temperature regulation, while simultaneously being compatible with the mechanical characteristics required by electric motors.

Among the main types of heat accumulation - sensible, latent and thermochemical - latent heat accumulation proves to be particularly interesting for its ability to provide a high storage density under near-isothermal conditions.

Latent heat storage is based on the heat absorbed or released when a material undergoes a phase change from solid to liquid or from liquid to gas (and vice versa), without significant changes in temperature, i.e. nearly isothermally. Such a material is commonly defined as a *phase change material* (PCM). PCMs are organic or inorganic substances, of natural origin or synthetic, which are generally used to accumulate and/or release thermal energy during the phase transition from a solid state to a liquid one and vice versa, thus exploiting not only their sensible heat capacity, but also their latent one.

PCMs are substantially divided into three families: metals, such as, for example, caesium, indium or gallium, inorganic salts like calcium chloride hexahydrate, magnesium chloride hexahydrate or potassium nitrate, or organic compounds, which include fatty acids and paraffin waxes.

The most widely used in the case of machines (electric or otherwise) are organic phase change materials, in particular paraffin waxes, since the other types are not suitable, due, respectively, to an excessively high molecular weight and thus high activation temperatures (metals), and poor stability and compatibility with the materials normally used in the sector (inorganic salts).

PCM paraffin waxes have many advantages, tied mainly to their high stability, low density, compatibility with the materials normally used for the production of machines (electric and non-electric) as well as their low cost. A major disadvantage, however, is represented by their low heat conductivity, as well as the problems connected with the viscosity of such materials in the liquid phase, which can cause leakage and difficulties when contained inside mechanical devices. Another disadvantage connected to the use of PCM waxes is related to the behaviour of such materials in the long term, i.e. after a certain number of solidification and melting cycles, which in many cases compromise their performance.

Another enormous difficulty lies in ensuring that the transition zone of the PCM substance used intersects with the operational temperature range of the system in question, which may not only be different depending on the various types of machines but, even for the same machine, can vary in the course of use.

Despite this, these materials are interesting and promising for a whole variety of technological applications, not only because they are capable of effectively storing thermal energy, but also because during the phase transition, which occurs within a specific temperature range, they enable the temperature of the system to be maintained constant.

In particular, their storage and heat management properties have attracted a great deal of interest especially in vehicle heating and cooling systems where the high latent heat of PCMs and their stable temperature range during the advancement of the phase change are exploited.

As described in patent WO2016153959, there are known applications of PCM materials for heating or preheating the interiors of vehicles (with internal combustion engines). In this case, during a previous cycle of running the engine, the storage of thermal energy by the PCM is exploited, as the energy is then released and transferred to the vehicle's HVAC system, allowing the vehicle itself to be heated while the engine is off, thus without consuming fuel. Similarly, as described in US 2013/0283827, the thermal energy accumulation capacities of PCMs are also exploited for the reverse mechanism, i.e. for the implementation of systems for air conditioning and cooling vehicles while the engine is off.

With regard, on the other hand, to solutions for cooling electric machines by using PCM materials to supplement classic liquid cooling systems, there are still few examples, especially in the *automotive* field.

From the studies by J.-X. Wang et al. ("Experimental investigation of the thermal control effects of phase change material based packaging strategy for on-board permanent magnet synchronous motors", Energy Conversion and Management, 123 (2016), 232-242 and *"Conception and experimental investigation of hybrid temperature control method using phase change material for permanent magnet synchronous motors",*

Experimental Thermal and Fluid Science, 81 (2017), 9-29), for example, applications are known of paraffin wax as a PCM for cooling and controlling temperature in *permanent magnet synchronous motors* (PMSMs) of *More Electric Aircraft* (MEA) or All *Electric Aircraft* (AEA), that is, aircraft in which there is a partial or total electrification of on-board utilities to replace the classic hydraulic, mechanical or pneumatic systems.

In this case, however, not only is the electric motor described by J.-X. Wang et al. necessarily different from an electric traction motor of high-performance machines, as regards both the intensity of the dissipated power peaks and the kinetics of the same, but the paraffin wax used also has an activation (and thus operating) temperature limited to a single melting temperature value and is thus not suitable for an effective management of temperatures under the operating conditions of a high-performance electric machine.

DE102012020958 refers to a cooling device for an electrical machine, for example an electric motor or a generator, and for a stator of such a machine, which comprises a combination of at least two-phase change materials (PCMs) which have a reversible, thermally inducible, endothermic phase transition at a phase transition temperature. DE102012020958 fails to disclose the use of a mixture of at least two PCM waxes with different melting temperatures.

In the sector of electric machines, preferably the *automotive sector,* there thus remains a need to provide a cooling system which, using a PCM which totally or partially replaces traditional liquid cooling systems, can make it possible to dampen power peaks of variable intensity and duration also in the course of use (characteristic, for example, of *automotive* electric motors given different driving styles and conditions) and which has a broad activation temperature range so as to be able to be effective in a wide operating temperature range without giving rise to losses, breakdown of the material or an impairment of performance after a number of cycles of use.

The present invention resolves the above-mentioned drawbacks of the prior art by providing a composition comprising a mixture of PCM waxes as an element for accumulating latent heat which, by virtue of the presence of at least two different waxes with different melting temperatures, enables an efficient control of temperature transients in a broad range, making it possible to effectively cool electric vehicle motors and improve the stability of the system with high performances also after a number of cycles, and is able to optimise temperature control according to the different operating conditions of the motor.

A further object of the present invention is to provide a method for producing a hollow cooling casing containing a composition comprising a mixture of at least two PCM waxes as an element for accumulating latent heat which is highly efficient in managing temperature transients and a method for cooling an electric machine, preferably *automotive,* which comprises the use of said hollow cooling casing.

### SUMMARY OF THE INVENTION

The present invention relates to the use of a composition comprising a mixture of at least two waxes belonging to the class of phase change materials (PCM waxes) with different melting temperatures, as an element for accumulating latent heat in an electric machine, preferably for *automotive* use.

Said composition is characterised by possessing a wide melting temperature range comprised between 60 and 120 °C, preferably between 70 and 105 °C.

The composition for use according to the present invention comprises a mixture of at least two PCM waxes selected in the group consisting of:
- a wax with a melting temperature comprised between 60 and 75 °C, preferably around 70 °C ("wax 1"),
- a wax with a melting temperature comprised between 76 and 85 °C, preferably around 80 °C ("wax 2"),
- a wax with a melting temperature comprised between 86 and 102 °C, preferably around 100 °C ("wax 3"),
- a wax with a melting temperature comprised between 103 and 120 °C, preferably around 105 °C ("wax 4"),
and combinations thereof.

In particular, the composition for use according to the present invention can comprise a mixture of two, three or four of the aforesaid waxes, and can be used as an element for accumulating latent heat in a wide temperature range, defined by the melting temperatures of the waxes used.

In one embodiment, the composition for use according to the present invention is contained inside a hollow cooling casing 1 of an electric machine 100, preferably for automotive use, said casing comprising a hollow body 2 and a cavity 6.

The present invention also relates to a method for producing a hollow cooling casing containing a composition comprising a mixture of at least two PCM waxes, said method comprising the steps of:
(i) making up a composition comprising a mixture of at least two PCM waxes with different melting temperatures, characterised by possessing a melting temperature range comprised between 60 and 120 °C, preferably between 70 and 105 °C;
(ii) heating said composition to above the upper endpoint of said melting temperature range, thereby obtaining the composition entirely in a melted state;
(iii) introducing the composition obtained in step (ii) and still in the melted state into a hollow cooling casing 1, thus filling the cavity 6 of said casing.

Finally, the present invention also relates to a method for cooling an electric machine, preferably for automotive use, which comprises the steps of:
(a) preparing an electric machine 100 comprising a stator 101 provided with a winding, a rotor 102 rotatably associated with said stator and a hollow cooling casing 1 containing a composition comprising a mixture of at least two PCM waxes prepared according to the method previously described;
(b) activating said electric machine by supplying current to the winding.

### BRIEF DESCRIPTION OF THE FIGURES

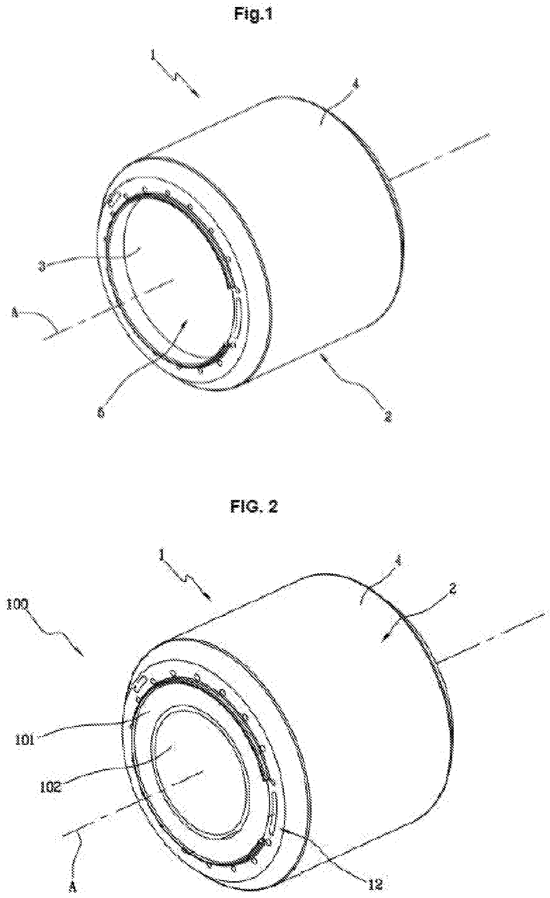

Figure 1 shows a perspective view of a cooling casing 1 for an electric machine 100 provided with a cavity 6 containing the composition for use according to the present invention.
Figure 2 shows a perspective view of an electric machine 100 provided with a cooling casing 1 provided with a cavity 6 containing the composition for use according to the present invention.
Figure 3 shows graphs relating to the individual PCM waxes (shown in Table I, example 1), obtained by *differential scanning calorimetry* (DSC) after one or two heating cycles.
Figure 4 shows graphs relating to the mixtures of at least two PCM waxes (shown in Table II, example 2), obtained by *differential scanning calorimetry* (DSC) after one or two heating cycles.
Figure 5 shows the temperature profile obtained when a metal container, filled or not filled with PCM wax mixture 1 as described in example 2, was subjected to a thermal cycle.
Figure 6 shows the temperature profile obtained when a metal container, filled or not filled with PCM wax mixture 2 as described in example 2, was subjected to a thermal cycle.
Figure 7 shows the temperature profile obtained when a metal container, filled or not filled with PCM wax mixture 3 as described in example 2, was subjected to a thermal cycle.
Figure 8 shows the temperature profile obtained when a metal container, filled or not filled with PCM wax mixture 4 as described in example 2, was subjected to a thermal cycle.
Figure 9 shows the temperature profile obtained when a metal container, filled or not filled with PCM wax mixture 5 as described in example 2, was subjected to a thermal cycle.
Figure 10 shows a comparison among the temperature profiles obtained when a metal container, filled or not filled with PCM wax mixtures 1-5 as described in example 2, was subjected to a thermal cycle.

### DETAILED DESCRIPTION OF THE INVENTION

For the purposes of the present invention, the terms "paraffin wax", "paraffin" and "paraffin hydrocarbons" are used as perfectly interchangeable synonyms and indicate a class of saturated aliphatic hydrocarbons (n-alkanes) having the general formula CₙH₂ₙ₊₂, whose number of carbon atoms is greater than 20. Examples of paraffin waxes are Fischer-Tropsch waxes, i.e. a mixture of saturated aliphatic hydrocarbons produced by means of Fischer-Tropsch synthesis, which provides for the polymerisation of carbon oxide under conditions of temperature comprised between 170 and 220 °C and of pressure comprised between 1 and 10 atmospheres.

The terms "wax" and "PCM wax", used as perfectly interchangeable synonyms, mean waxes as previously defined, belonging to the class of phase change materials (PCMs). In the present context, the term "phase change material" (PCM)" is meant to define a latent heat accumulating material, particularly a wax, which exploits the phase transition phenomenon to absorb incoming energy flows, thus storing a large amount of energy and maintaining its own temperature substantially constant.

The terms "melting temperature" and "activation temperature", with reference to PCM waxes, are used as perfectly interchangeable synonyms for the purposes of the present invention.

In the present context, the term "cooling casing" is not meant to refer to absolute temperature values of the casing; rather, it is intended to define a casing with a capacity to counter temperature increases of an electric machine, maintaining the temperature thereof at optimal operating values.

For the purposes of the present invention, the terms "melted state", "melted" and "liquefied" are used as interchangeable synonyms with the meaning of "brought to a liquid state by heat".

The present invention relates to the use of a composition comprising a mixture of at least two waxes belonging to the class of phase change materials (PCM waxes) as an element for accumulating latent heat in an electric machine, preferably for automotive use.

Said composition advantageously enables abrupt external temperature changes to be absorbed, thus substantially maintaining the overall temperature of the system unchanged. Said composition effectively performs the function of an element for accumulating latent heat since it enables the heat released by an external source to be absorbed without increasing its internal temperature above that of activation, that is, in a substantially isothermal manner.

For the purposes of producing the composition for use according to the present invention as a heat accumulating element, it is possible to combine different waxes, i.e. with two different melting temperatures, according to the temperature range in which it is desired that the mixture is active, i.e. absorbs heat.

The composition for use according to the present invention is preferably in a solid state at room temperature, but when the temperature rises and exceeds a certain transition threshold, the composition liquefies, accumulating heat (latent heat of liquefaction), which is removed from an electric machine. In the same manner, when the temperature falls, the liquefied composition solidifies and transfers heat (latent heat of solidification). The composition for use as an element for accumulating latent heat according to the present invention comprises a mixture of at least two PCM waxes with different melting temperatures. Said composition therefore possesses a wide melting temperature range. Said melting temperature range is comprised between 60 and 120 °C, preferably between 70 and 105 °C.

In one embodiment of the invention, the composition comprises a mixture of at least two PCM waxes having different melting temperatures which are selected in the group consisting of:
- a wax with a melting temperature comprised between 60 and 75 °C, preferably around 70 °C ("wax 1"),
- a wax with a melting temperature comprised between 76 and 85 °C, preferably around 80 °C ("wax 2"),
- a wax with a melting temperature comprised between 86 and 102 °C, preferably around 100 °C ("wax 3"),
- a wax with a melting temperature comprised between 103 and 120 °C, preferably around 105 °C ("wax 4"),
and combinations thereof.

Preferably, said waxes are selected in the group consisting of:
- a wax composed of straight-chain paraffin hydrocarbons with a number of carbon atoms comprised between 20 and 50 and with a melting temperature comprised between 60 and 75 °C, preferably around 70 °C ("wax 1");
- a completely hydrogenated Fischer-Tropsch wax composed of prevalently straight hydrocarbon chains, with an average molecular weight comprised between 500 and 700 Dalton and with a melting temperature comprised between 76 and 85 °C, preferably around 80 °C ("wax 2");
- a completely hydrogenated Fischer-Tropsch wax composed of prevalently straight hydrocarbon chains, with an average molecular weight comprised between 800 and 1000 Dalton and with a melting temperature comprised between 86 and 102 °C, preferably around 100 °C ("wax 3");
- a wax composed of a multicomponent mixture of saturated n-alkanes produced by Fischer-Tropsch synthesis, with an average molecular weight comprised between 1000 and 1200 Dalton and with a melting temperature comprised between 103 and 120 °C, preferably around 105 °C ("wax 4").

In one embodiment of the invention, the composition is a "two-wax composition" comprising a mixture of two of the PCM waxes listed above.

Said two-wax composition can therefore be advantageously used as an element for accumulating latent heat in a wide temperature range, defined by the melting temperatures of the waxes used.

For example, if the composition comprises a mixture of "wax 1" with "wax 2", said composition can be used as an element for accumulating latent heat in a temperature range comprised between 60 and 85 °C, preferably comprised between 70 and 80 °C, and so on for the other possible combinations.

In a preferred embodiment, the composition comprises a mixture of "wax 2" with "wax 3". Said composition can therefore be advantageously used as an element for accumulating latent heat in a temperature range comprised between 76 and 102 °C, preferably between 80 and 100 °C.

In another preferred embodiment, the composition comprises a mixture of "wax 2" with "wax 4". Said composition can therefore be advantageously used as an element for accumulating latent heat in a temperature range comprised between 76 and 120 °C, preferably between 80 and 105 °C.

The two-wax composition for use according to the present invention preferably comprises one wax in an amount comprised between 40 and 60% by weight, preferably between 45 and 55% by weight, and the other wax in a complementary amount comprised between 40 and 60% by weight, preferably between 45 and 55% by weight.

In one embodiment of the invention the composition is a "three-wax composition" comprising a mixture of three of the PCM waxes listed above.

Said three-wax composition can therefore be advantageously used as an element for accumulating latent heat in a wide temperature range, defined by the melting temperatures of the waxes used.

For example, if the composition comprises a mixture of "wax 1", "wax 2" and "wax 3", said composition can be used as an element for accumulating latent heat in a temperature range comprised between 60 and 102 °C, preferably between 70 and 100 °C, and so on for the other possible combinations.

In a preferred embodiment, the composition comprises a mixture of "wax 2", "wax 3" and "wax 4". Said composition can therefore be advantageously used as an element for accumulating latent heat in a temperature range comprised between 76 and 120 °C, preferably between 80 and 105 °C.

The three-wax composition for use according to the present invention preferably comprises one wax in an amount comprised between 20 and 60% by weight, preferably between 30 and 50% by weight, and the other two waxes in complementary amounts, i.e. one wax in an amount comprised between 20 and 60% by weight, preferably between 20 and 40% by weight, and the other wax in an amount comprised between 20 and 60% by weight, preferably between 20 and 40% by weight.

In one embodiment of the invention the composition is a "four-wax composition" comprising a mixture of all four PCM waxes listed above.

Said four-wax composition can therefore be advantageously used as an element for accumulating latent heat in a wide temperature range, defined by the melting temperatures of the waxes used.

In this case, said four-wax composition can be used as an element for accumulating latent heat in a temperature range comprised between 60 and 120 °C, preferably between 70 and 105 °C.

In a preferred embodiment, the composition of the invention comprises from 40 to 60% by weight, preferably from 45 to 55% by weight, of a mixture of "wax 2" with "wax 4" and from 40 to 60% by weight, preferably from 45 to 55% by weight, of a mixture of "wax 1" with "wax 3". Said composition therefore comprises wax 1 in an amount comprised between 10 and 30% by weight, preferably between 15 and 25% by weight, wax 2 in an amount comprised between 15 and 35% by weight, preferably between 20 and 30% by weight, wax 3 in an amount comprised between 20 and 40% by weight, preferably between 25 and 35% by weight and wax 4 in an amount comprised between 15 and 35% by weight, preferably between 20 and 30% by weight.

In another preferred embodiment, the composition of the invention comprises from 40 to 60% by weight, preferably from 45 to 55% by weight, of a mixture of "wax 1" with "wax 2" and from 40 to 60% by weight, preferably from 45 to 55% by weight, of a mixture of "wax 3" with "wax 4". Said composition therefore comprises wax 1 in an amount comprised between 10 and 30% by weight, preferably between 15 and 25% by weight, wax 2 in an amount comprised between 20 and 40% by weight, preferably between 25 and 35% by weight, wax 3 in an amount comprised between 20 and 40% by weight, preferably between 25 and 35% by weight and wax 4 in an amount comprised between 10 and 30% by weight, preferably between 15 and 25% by weight.

The four-wax composition for use according to the present invention preferably comprises a first wax in an amount comprised between 10 and 40% by weight, preferably between 15 and 35% by weight, and the other three waxes in complementary amounts, i.e. one wax in an amount comprised between 10 and 40% by weight, preferably between 15 and 35% by weight, another wax in an amount comprised between 10 and 40% by weight, preferably between 15 and 35% by weight, and the additional wax in an amount comprised between 10 and 40% by weight, preferably between 15 and 35% by weight.

In one embodiment, the composition for use according to the present invention as an element for accumulating latent heat in an electric machine, preferably for automotive use, is contained inside a hollow cooling casing 1.

Said casing preferably comprises a hollow body 2 extending around a central axis A thereof and provided with a radially inner wall 3 delimiting a receiving volume 5 of an electric machine 100, and a radially outer wall 4.

In other words, the hollow body preferably has an at least partly tubular conformation around the central axis, thus delimiting a central volume for receiving the electric machine.

Preferably, furthermore, a cavity 6 is delimited between the radially inner wall and the radially outer wall.

Therefore, the thickness of the hollow body between the two walls is not completely "full", but rather has one or more empty portions represented at least in part by said cavity.

According to one aspect of the invention, the composition for use as an element for accumulating latent heat is contained and distributed uniformly inside said cavity of the cooling casing.

Said composition is preferably contained in said cavity in a pre-established amount.

Advantageously, the composition comprising a mixture of at least two PCM waxes with different melting temperatures interfaces with the electric motor of an electric machine 100, preferably for automotive use, comprising a stator 101 provided with a winding, within which a rotor 102 associated with the stator rotates coaxially, and a cooling casing as previously described, wherein the stator is housed inside the receiving volume 5 of the hollow body 2.

In particular, the composition contained inside the cavity 6 interfaces with the stator, absorbing and releasing heat without impacting the temperature of the casing itself and thus of the electric machine.

The cooling casing 1 and in particular the hollow body 2 are preferably made of a metal material, preferably aluminium. Other materials that may be used to produce the cooling casing are for example aluminium alloys, metals and alloys whose heat conductivity is greater than or equal to 90W/mK.

The use of the composition as previously described as an element for accumulating latent heat in electric machines enables the temperature of the electric motor of the machine to be maintained within acceptable limits while reducing the flow and flow rate of any traditional cooling liquids present or even making it possible to completely eliminate traditional cooling liquid systems.

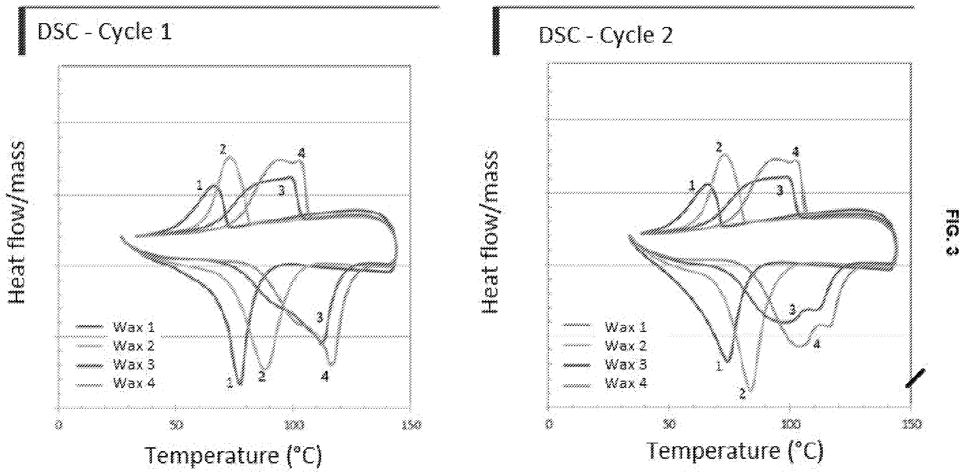

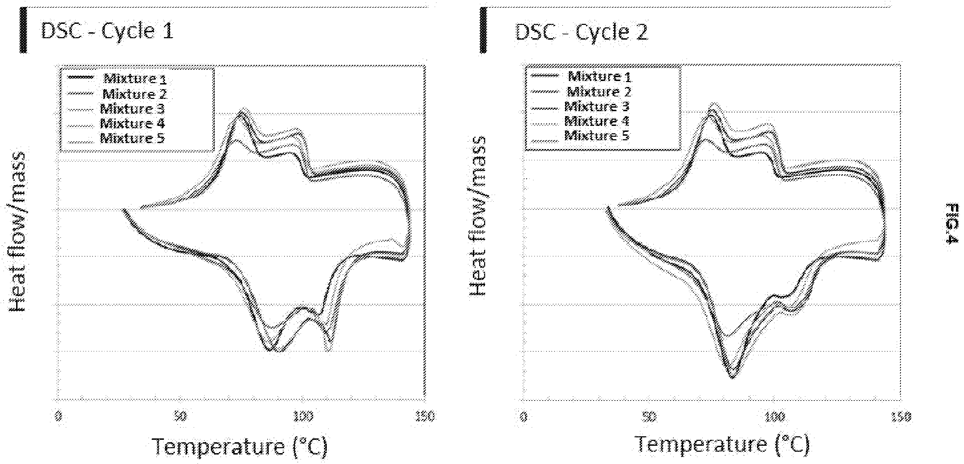

One advantage tied to the use of the composition according to the present invention is that, unlike when use is made of only one type of PCM wax, which will have a precise activation temperature (i.e. represented by a "triangular" melting peak), the use of a mixture of at least two PCM waxes with different melting temperatures makes it possible to widen the range in which the phase transition takes place, i.e. in which the mixture absorbs the latent heat of the system (see the comparison between Figures 3 and 4).

The fact that the shape of the melting peak is "quadrangular" rather than "triangular" ensures that said mixtures are advantageously active continuously in a temperature range, unlike with the use of a single wax, which exhibits localised temperature transients.

Another advantage related to the use of the composition as an element for accumulating latent heat is that by combining at least two of the PCM waxes with different activation temperatures as previously described, it is possible, in the operating temperature range of an electric machine, to have part of the mixture in the solid state, which maintains a level of viscosity compatible with its use inside mechanical devices, such as, for example, a cooling casing, also in the event that one or more of the other waxes in the mixture are completely melted.

Since the viscosity of the composition for use according to the present invention depends on the type of the at least two waxes in the mixture and their relative concentrations (% amount), according to the different thermal profiles to be managed, the composition for use according to the present invention may thus be modified by mixing the different types of PCM waxes in different amounts according to what was previously described. This advantageously enables phenomena of segregation of the mixture and/or losses of material to be limited or even avoided, thus maintaining the original homogeneous distribution of the composition. The composition for use according to the present invention thus has high stability and enables high performances to be obtained even after a number of thermal cycles.

The present invention also relates to a method for producing a hollow cooling casing containing a composition comprising a mixture of at least two PCM waxes, said method comprising the steps of:
(i) making up a composition comprising a mixture of at least two PCM waxes with different melting temperatures as an element for accumulating latent heat, said composition being characterised by possessing a melting temperature range comprised between 60 and 120 °C, preferably between 70 and 105 °C;
(ii) heating the composition to above the upper endpoint of said melting temperature range, preferably to a temperature comprised between 80 and 160 °C, even more preferably between 100 and 140 °C, thereby obtaining the composition entirely in a melted state;
(iii) introducing the composition obtained in step (ii) and still in the melted state into a hollow cooling casing 1 as previously described, thus filling the cavity 6 of said casing.

Said hollow cooling casing is as previously described and is thus a cooling casing of an electric machine, preferably for automotive use.

Said composition comprising a mixture of at least two PCM waxes is as previously described.

The present invention also relates to a method for cooling an electric machine, preferably for automotive use, which comprises the steps of:
(a) preparing an electric machine 100 comprising a stator 101 provided with a winding, a rotor 102 rotatably associated with said stator, said stator being housed inside the receiving volume 5 of the hollow body 2 of a hollow cooling casing 1 containing a composition comprising a mixture of at least two PCM waxes prepared according to steps (i)-(iii) of the method previously described;
(b) activating said electric machine by supplying current to the winding.

The method for cooling of an electric machine, preferably for automotive use, according to the present invention, by virtue of the presence of an element for accumulating latent heat (i.e. the composition as previously described) inside the body of the casing, makes it possible overall to slow down the rapid temperature transients to which electric motors are subject, in particular in *automotive* applications, enabling the temperature of the system to be maintained as much as possible around values that are optimal for the operation of the electric machine, preferably for control under different conditions and with different driving styles.

In a preferred embodiment, the method for cooling an electric machine, preferably for automotive use, according to the present invention, comprises a further step (a.1) of also providing, in the cooling casing 1 as previously described, a fluid cooling circuit 12, preferably a liquid cooling circuit, complementary to the cavity 6.

Advantageously, in this manner the performance of the cooling casing is optimised, thus maximising both the advantages in the use of a composition comprising a mixture of at least two PCM waxes for use as an element for accumulating latent heat, and those of a liquid cooling system.

The two cooling systems are complementary to each other and integrated and work precisely on shared zones of the stator 101, thus maximising the performances of the electric machine.

This embodiment of the method for cooling an electric machine according to the present invention, thanks to the presence of a cavity in the cooling casing filled with an element for accumulating latent heat (i.e. the composition as previously described) complementarily with a fluid cooling circuit, enables the system's response to be optimised also in the cooling phase.

### EXAMPLES

### 1. Selection and DSC characterisation of the individual PCM waxes

The characteristics of the waxes used in the following example embodiments are schematically described in the table below (Table I).

**Table I**

| # | **PCM waxes** | Melting temperature |
|---|---|---|
| Wax 1 | Straight-chain paraffin hydrocarbons with a number of carbon atoms comprised between 20 and 50 | 60-75°C, ∼70 °C |
| Wax 2 | Completely hydrogenated Fischer-Tropsch wax composed of prevalently straight hydrocarbon chains, with an average molecular weight comprised between 500 and 700 Dalton | 76-85°C, ∼80 °C |
| Wax 3 | Completely hydrogenated Fischer-Tropsch wax composed of prevalently straight hydrocarbon chains, with an average molecular weight comprised between 800 and 1000 Dalton | 86-102°C, ∼100 °C |
| Wax 4 | Multicomponent mixture of saturated n-alkanes produced by Fischer-Tropsch synthesis, with an average molecular weight comprised between 1000 and 1200 Dalton | 103-120 °C, ∼105 °C |

The waxes were characterised by means of the *differential scanning calorimetry* (DSC) technique, with which it is possible to determine the start and end temperatures of every transition (melting upon heating and solidification upon cooling).

Figure 3 shows graphs related to the DSC characterisation on samples of the individual waxes during the first heating/cooling cycle and during the second heating/cooling cycle. It is important to observe that the shape of the curves shown in the figure changes slightly from the first to the second cycle only for the melting phase, whereas the two graphs are identical if only the re-solidification phase is considered. This is due to internal rearrangements that occur during the first heating cycle.

### 2. Selection and DSC characterisation of the compositions comprising mixtures of at least two PCM waxes

The characteristics of the mixtures used according to one embodiment of the present invention are schematically described in the table below (Table II).

**Table II**

| # | Wax 1 | Wax 2 | Wax 3 | Wax 4 |
|---|---|---|---|---|
| Mixture 1 Two-wax composition | | 40-60% | 40-60% | |
| Mixture 2 Four-wax composition | 10-30% | 15-35% | 20-40% | 15-35% |
| Mixture 3 Two-wax composition | | 40-60% | | 40-60% |
| Mixture 4 Three-wax composition | | 20-40% | 20-40% | 20-40% |
| Mixture 5 Four-wax composition | 10-30% | 20-40% | 20-40% | 10-30% |

The various mixtures of waxes used (mixture 1, mixture 2, mixture 3, mixture 4 and mixture 5) were characterised by *differential scanning calorimetry* (DSC) in order to be able to determine the activation temperatures of each mixture and observe the change in the peaks in the temperature range of interest, i.e. between 60 and 120 °C.

Figure 4 shows graphs relating to the DSC characterisation on samples of such mixtures of at least two PCM waxes, during the first heating/cooling cycle and during the second heating/cooling cycle. In this case as well, as for the samples of individual waxes, the shape of the curves shown in the figures changes slightly from the first to the second cycle only for the melting phase, whereas the two graphs are identical if only the re-solidification phase is considered. However, by comparing the two figures (3 and 4) it is possible to appreciate that, in the case of mixtures of at least two waxes, the shape of the curves is more quadrangular as opposed to the more "triangular" shape in the case of the individual waxes. This indicates that the mixtures of at least two PCM waxes are always active in the specific range, unlike the individual waxes, which show transitions that are much more localised in temperature.

### 3. Example of application

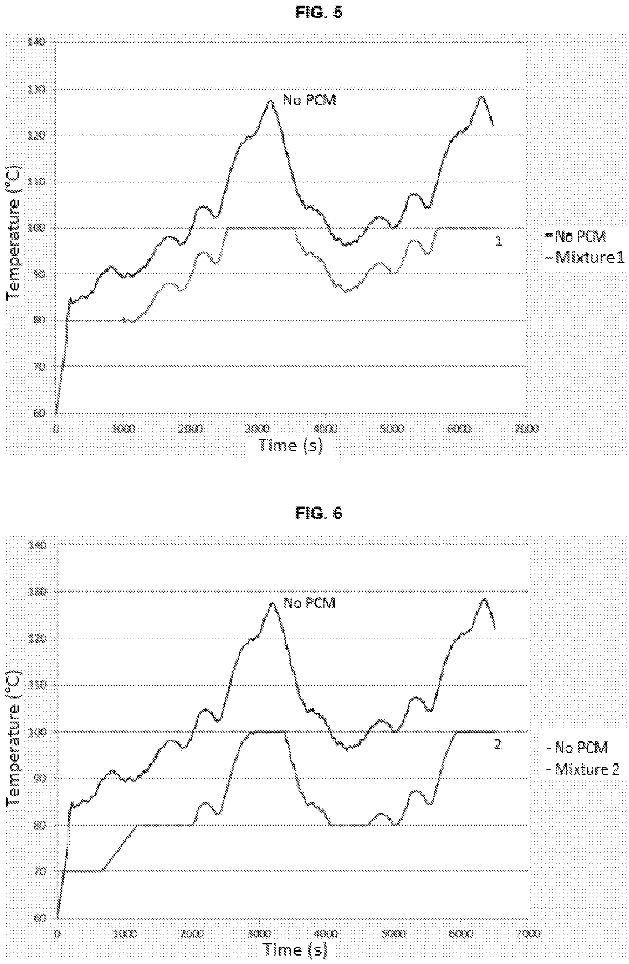

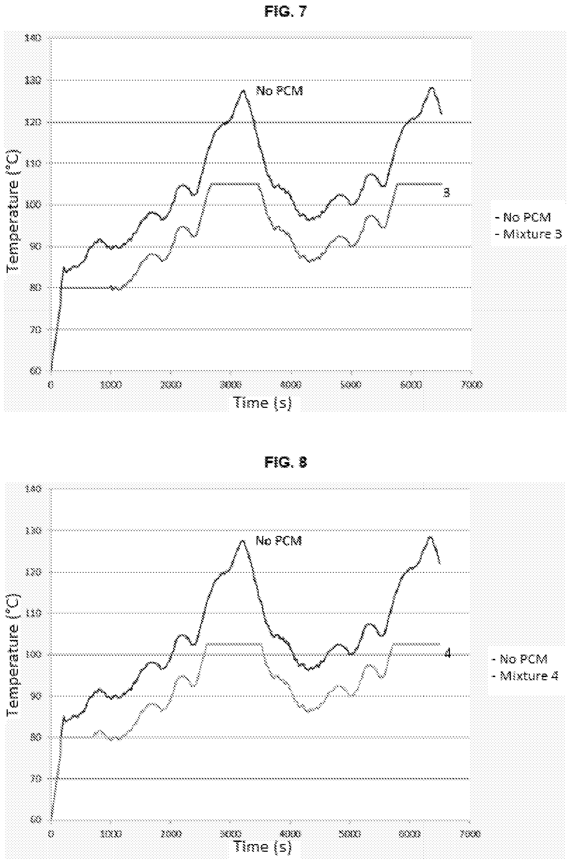

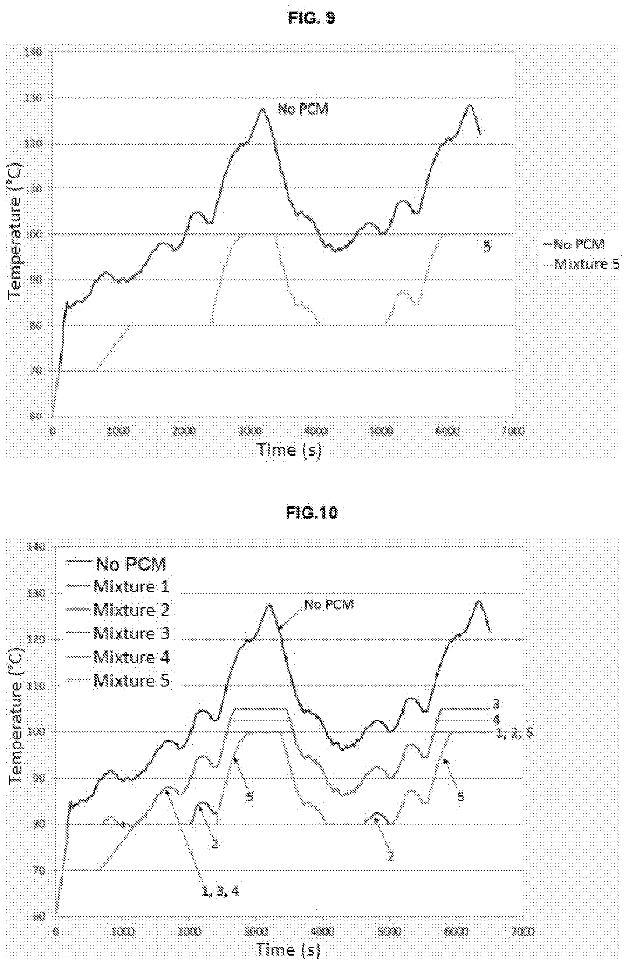

Figures 5-10 show the temperature profiles obtained when a metal container, filled or not filled with the various mixtures of PCM waxes described in example 2, was subjected to a thermal cycle. The metal container can be taken as a model for studying the behaviour and the thermal response of a cooling casing as previously described under operating conditions that simulate those present in electric machines, preferably for automotive use.

From the curves shown in figures 5-10 it is possible to appreciate how the mixtures of PCM waxes, by virtue of their capacity to accumulate latent heat in a near-isothermal manner in a temperature range, enable the container to absorb heat without simultaneously impacting the temperature of the container itself.

It is further possible to observe that, using mixtures of PCM waxes with different activation temperatures, the temperature profile varies differently depending on the relative concentrations (% amount of the at least two waxes composing each mixture) and the characteristic melting temperatures of each wax (shown in Tables I and II), making it possible to choose the mixture best suited to the thermal profile to be managed.

## Claims

1. A use of a composition comprising a mixture of at least two PCM waxes with different melting temperatures as an element for accumulating latent heat in electric machines, preferably for automotive use, said composition being **characterised by** possessing a melting temperature range comprised between 60 and 120 °C.

2. The use according to claim 1, wherein said melting temperature range is comprised between 70 and 105 °C.

3. The use according to claim 1 or 2, wherein said composition comprises a mixture of at least two PCM waxes with different melting temperatures, selected in the group consisting of:
- a wax with a melting temperature comprised between 60 and 75 °C, preferably around 70 °C ("wax 1"),
- a wax with a melting temperature comprised between 76 and 85 °C, preferably around 80 °C ("wax 2),
- a wax with a melting temperature comprised between 86 and 102 °C, preferably around 100 °C ("wax 3"),
- a wax with a melting temperature comprised between 103 and 120 °C, preferably around 105 °C ("wax 4"),
and combinations thereof.

4. The use according to any one of the preceding claims, wherein said waxes are selected in the group consisting of:
- wax composed of straight-chain paraffin hydrocarbons with a number of carbon atoms comprised between 20 and 50 and with a melting temperature comprised between 60 and 75 °C, preferably around 70 °C ("wax 1");
- completely hydrogenated Fischer-Tropsch wax composed of prevalently straight hydrocarbon chains, with an average molecular weight comprised between 500 and 700 Dalton and with a melting temperature comprised between 76 and 85 °C, preferably around 80 °C ("wax 2");
- completely hydrogenated Fischer-Tropsch wax composed of prevalently straight hydrocarbon chains, with an average molecular weight comprised between 800 and 1000 Dalton and with a melting temperature comprised between 86 and 102 °C, preferably around 100 °C ("wax 3");
- wax composed of a multicomponent mixture of saturated n-alkanes produced by Fischer-Tropsch synthesis, with an average molecular weight comprised between 1000 and 1200 Dalton and with a melting temperature comprised between 103 and 120 °C, preferably around 105 °C ("wax 4").

5. The use according to any one of the preceding claims, wherein said composition is a "two-wax composition" comprising a mixture of two PCM waxes with different melting temperatures.

6. The use according to claim 5, wherein said composition comprises a mixture of "wax 2" with "wax 3" or of "wax 2" with "wax 4", said composition being **characterised by** possessing a melting temperature range comprised between 76 and 102 °C, preferably between 80 and 100 °C, or between 76 and 120 °C, preferably between 80 and 105 °C.

7. The use according to claim 5 or 6, wherein said composition comprises a wax in an amount comprised between 40 and 60% by weight, preferably between 45 and 55% by weight, and the other wax in a complementary amount comprised between 40 and 60% by weight, preferably between 45 and 55% by weight.

8. The use according to any one of claims 1-4, wherein said composition is a "three-wax composition" comprising a mixture of three PCM waxes with different melting temperatures.

9. The use according to claim 8, wherein said composition comprises a mixture of "wax 2", "wax 3" and "wax 4", said composition being **characterised by** possessing a melting temperature range comprised between 76 and 120 °C, preferably between around 80 and around 105 °C.

10. The use according to claim 8 or 9, wherein said composition comprises a wax in an amount comprised between 20 and 60% by weight, preferably between 30 and 50% by weight, and the other two waxes in complementary amounts, one wax being in an amount comprised between 20 and 60% by weight, preferably between 20 and 40% by weight, and the other wax in an amount comprised between 20 and 60% by weight, preferably between 20 and 40% by weight.

11. The use according to any one of claims 1-4, wherein said composition is a "four-wax composition" comprising a mixture of four PCM waxes with different melting temperatures.

12. The use according to claim 11, wherein said composition comprises a mixture of "wax 1", "wax 2", "wax 3" and "wax 4", said composition being **characterised by** possessing a melting temperature range comprised between 60 and 120 °C, preferably between around 70 and around 105 °C.

13. The use according to claim 11 or 12, wherein said composition comprises a first wax in an amount comprised between 10 and 40% by weight, preferably between 15 and 35% by weight, and the other three waxes in complementary amounts, one wax being in an amount comprised between 10 and 40% by weight, preferably between 15 and 35% by weight, another wax in an amount comprised between 10 and 40% by weight, preferably between 15 and 35% by weight and the further wax in an amount comprised between 10 and 40% by weight, preferably between 15 and 35% by weight.

14. The use according to any one of the preceding claims, wherein said composition is contained inside a hollow cooling casing for an electric machine, preferably for automotive use, comprising:
- a hollow body 2 extending around a central axis A thereof and provided with a radially inner wall 3 delimiting a receiving volume 5 of an electric machine 100, and a radially outer wall 4;
- a cavity 6 delimited between said radially inner wall 3 and said radially outer wall 4.

15. A method for producing a hollow cooling casing 1 containing a composition comprising a mixture of at least two PCM waxes, said method comprising the steps of:
(i) making up a composition comprising a mixture of at least two PCM waxes with different melting temperatures as an element for accumulating latent heat, said composition being **characterised by** possessing a melting temperature range comprised between 60 and 120 °C, preferably between 70 and 105 °C;
(ii) heating the composition to above the upper endpoint of said melting temperature range, preferably to a temperature comprised between 80 and 160 °C, even more preferably between 100 and 140 °C, thereby obtaining the composition entirely in a melted state;
(iii) introducing the composition obtained in step (ii) and still in the melted state into a hollow cooling casing 1, said casing comprising a hollow body 2 extending around a central axis A thereof and provided with a radially inner wall 3 delimiting a receiving volume 5, and a radially outer wall 4, further comprising a cavity 6 delimited between said radially inner wall 3 and said radially outer wall 4, said composition being introduced inside said cavity 6.

16. A method for cooling an electric machine, preferably for automotive use, which comprises the steps of:
(a) preparing an electric machine 100 comprising a stator 101 provided with a winding, a rotor 102 rotatably associated with said stator, said stator being housed inside the receiving volume 5 of the hollow body 2 of a hollow cooling casing 1 obtained according to claim 15;
(b) activating said electric machine by supplying current to the winding.

17. The method according to claim 16, further comprising the step (a.1) of providing, in said hollow cooling casing, a fluid cooling circuit 12, preferably a liquid cooling circuit, complementary to the cavity 6.

## Patentansprüche

1. Verwendung einer Zusammensetzung, umfassend eine Mischung aus mindestens zwei PCM-Wachsen mit unterschiedlichen Schmelztemperaturen als Element zur Speicherung latenter Wärme in elektrischen Maschinen, vorzugsweise für die Nutzung im Kfz-Bereich, wobei die Zusammensetzung **dadurch gekennzeichnet ist, dass** sie einen Schmelztemperaturbereich besitzt, der zwischen 60 und 120 °C eingeschlossen ist.

2. Verwendung nach Anspruch 1, wobei der Schmelztemperaturbereich zwischen 70 und 105 °C eingeschlossen ist.

3. Verwendung nach Anspruch 1 oder 2, wobei die Zusammensetzung eine Mischung aus mindestens zwei PCM-Wachsen mit unterschiedlichen Schmelztemperaturen umfasst, die in der Gruppe ausgewählt wurden, bestehend aus:
- einem Wachs mit einer Schmelztemperatur, die zwischen 60 und 75 °C eingeschlossen ist, vorzugsweise etwa 70 °C ("Wachs 1"),
- einem Wachs mit einer Schmelztemperatur, die zwischen 76 und 85 °C eingeschlossen ist, vorzugsweise etwa 80 °C ("Wachs 2"),
- einem Wachs mit einer Schmelztemperatur, die zwischen 86 und 102 °C eingeschlossen ist, vorzugsweise etwa 100 °C ("Wachs 3"),
- einem Wachs mit einer Schmelztemperatur, die zwischen 103 und 120 °C eingeschlossen ist, vorzugsweise etwa 105 °C ("Wachs 4"),
und Kombinationen von diesen.

4. Verwendung nach einem der vorhergehenden Ansprüche, wobei diese Wachse ausgewählt sind in der Gruppe, bestehend aus:
- Wachs, bestehend aus geradkettigen Paraffin-Kohlenwasserstoffen mit einer Anzahl an Kohlenstoffatomen, die zwischen 20 und 50 eingeschlossen ist, und mit einer Schmelztemperatur, die zwischen 60 und 75 °C eingeschlossen ist, vorzugsweise etwa 70 °C ("Wachs 1");
- komplett hydriertem Fischer-Tropfsch-Wachs, bestehend aus vorwiegend geraden Kohlenstoffketten, mit einem mittleren Molekulargewicht, das zwischen 500 und 700 Dalton eingeschlossen ist, und mit einer Schmelztemperatur, die zwischen 76 und 85 °C eingeschlossen ist, vorzugsweise etwa 80 °C ("Wachs 2");
- komplett hydriertem Fischer-Tropfsch-Wachs, bestehend aus vorwiegend geraden Kohlenstoffketten, mit einem mittleren Molekulargewicht, das zwischen 800 und 1000 Dalton eingeschlossen ist, und mit einer Schmelztemperatur, die zwischen 86 und 102 °C eingeschlossen ist, vorzugsweise etwa 100 °C ("Wachs 3") ;
- Wachs, bestehend aus einer mehrkomponentigen Mischung gesättigter n-Alkane, erzeugt durch Fischer-Tropfsch-Synthese, mit einem mittleren Molekulargewicht, das zwischen 1000 und 1200 Dalton eingeschlossen ist, und mit einer Schmelztemperatur, die zwischen 103 und 120 °C eingeschlossen ist, vorzugsweise etwa 105 °C ("Wachs 4") .

5. Verwendung nach einem der vorhergehenden Ansprüche, wobei die Zusammensetzung eine "Zwei-Wachs-Zusammensetzung" ist, die eine Mischung aus zwei PCM-Wachsen mit unterschiedlichen Schmelztemperaturen umfasst.

6. Verwendung nach Anspruch 5, wobei die Zusammensetzung eine Mischung aus "Wachs 2" mit "Wachs 3" oder aus "Wachs 2" mit "Wachs 4" umfasst, wobei die Zusammensetzung **dadurch gekennzeichnet ist, dass** sie einen Schmelztemperaturbereich besitzt, der zwischen 76 und 102 °C eingeschlossen ist, vorzugsweise zwischen 80 und 100 °C oder zwischen 76 und 120 °C, vorzugsweise zwischen 80 und 105 °C.

7. Verwendung nach Anspruch 5 oder 6, wobei die Zusammensetzung ein Wachs in einer Menge umfasst, die zwischen 40 und 60 Gew.% eingeschlossen ist, vorzugsweise zwischen 45 und 55 Gew.%, und das Wachs in einer komplementären Menge zwischen 40 und 60 Gew.% eingeschlossen ist, vorzugsweise zwischen 45 und 55 Gew.%.

8. Verwendung nach einem der Ansprüche 1-4, wobei die Zusammensetzung eine "Drei-Wachs-Zusammensetzung" ist, die eine Mischung aus drei PCM-Wachsen mit unterschiedlichen Schmelztemperaturen umfasst.

9. Verwendung nach Anspruch 8, wobei die Zusammensetzung eine Mischung aus "Wachs 2", "Wachs 3" und "Wachs 4" umfasst, wobei die Zusammensetzung **dadurch gekennzeichnet ist, dass** sie einen Schmelztemperaturbereich besitzt, der zwischen 76 und 120 °C eingeschlossen ist, vorzugsweise zwischen etwa 80 und etwa 105 °C.

10. Verwendung nach Anspruch 8 oder 9, wobei die Zusammensetzung ein Wachs in einer Menge umfasst, die zwischen 20 und 60 Gew.% eingeschlossen ist, vorzugsweise zwischen 30 und 50 Gew.%, und die anderen beiden Wachse in komplementären Mengen, ein Wachs in einer Menge, die zwischen 20 und 60 Gew.% eingeschlossen ist, vorzugsweise zwischen 20 und 40 Gew.%, und das andere Wachs in einer Menge, die zwischen 20 und 60 Gew.% eingeschlossen ist, vorzugsweise zwischen 20 und 40 Gew.%.

11. Verwendung nach einem der Ansprüche 1-4, wobei die Zusammensetzung eine "Vier-Wachs-Zusammensetzung" ist, die eine Mischung aus vier PCM-Wachsen mit unterschiedlichen Schmelztemperaturen umfasst.

12. Verwendung nach Anspruch 11, wobei die Zusammensetzung eine Mischung aus "Wachs 1", "Wachs 2", "Wachs 3" und "Wachs 4" umfasst, wobei die Zusammensetzung **dadurch gekennzeichnet ist, dass** sie einen Schmelztemperaturbereich besitzt, der zwischen 60 und 120 °C eingeschlossen ist, vorzugsweise zwischen etwa 70 und etwa 105 °C.

13. Verwendung nach Anspruch 11 oder 12, wobei die Zusammensetzung ein erstes Wachs in einer Menge umfasst, die zwischen 10 und 40 Gew.% eingeschlossen ist, vorzugsweise zwischen 15 und 35 Gew.%, und die anderen drei Wachse in komplementären Mengen, ein Wachs in einer Menge, die zwischen 10 und 40 Gew.% eingeschlossen ist, vorzugsweise zwischen 15 und 35 Gew.%, ein anderes Wachs in einer Menge, die zwischen 10 und 40 Gew.% eingeschlossen ist, vorzugsweise zwischen 15 und 35 Gew.%, und das weitere Wachs in einer Menge, die zwischen 10 und 40 Gew.% eingeschlossen ist, vorzugsweise zwischen 15 und 35 Gew.%.

14. Verwendung nach einem der vorhergehenden Ansprüche, wobei die Zusammensetzung innerhalb eines hohlen Kühlgehäuses für eine elektrische Maschine, vorzugsweise für die Nutzung im Kfz-Bereich, enthalten ist, umfassend:
- einen hohlen Körper 2, der sich rund um eine mittige Achse A davon erstreckt und mit einer radial inneren Wand 3 versehen ist, die ein Aufnahmevolumen 5 einer elektrischen Maschine 100 begrenzt, und einer radial äußeren Wand 4;
- einen Hohlraum 6, der zwischen der radial inneren Wand 3 und der radial äußeren Wand 4 begrenzt ist.

15. Verfahren zur Herstellung eines hohlen Kühlgehäuses 1, enthaltend eine Zusammensetzung, umfassend eine Mischung aus mindestens zwei PCM-Wachsen, wobei das Verfahren die folgenden Schritte umfasst:
(i) Herstellen einer Zusammensetzung, umfassend eine Mischung aus mindestens zwei PCM-Wachsen mit unterschiedlichen Schmelztemperaturen als Element zur Speicherung latenter Wärme in elektrischen Maschinen, wobei die Zusammensetzung **dadurch gekennzeichnet ist, dass** sie einen Schmelztemperaturbereich besitzt, der zwischen 60 und 120 °C eingeschlossen ist, vorzugsweise zwischen 70 und 105 °C;
(ii) Erwärmen der Zusammensetzung auf einen Wert über dem oberen Endpunkt des Schmelztemperaturbereichs, vorzugsweise auf eine Temperatur, die zwischen 80 und 160 °C eingeschlossen ist, noch bevorzugter zwischen 100 und 140 °C, wodurch die Zusammensetzung vollständig in einem geschmolzenen Zustand erhalten wird;
(iii) Einführen der in Schritt (ii) erhaltenen und noch im geschmolzenen Zustand befindlichen Zusammensetzung in ein hohles Kühlgehäuse 1, wobei das Gehäuse einen hohlen Körper 2 umfasst, der sich rund um eine mittige Achse A davon erstreckt und mit einer radial inneren Wand 3 versehen ist, die ein Aufnahmevolumen 5 begrenzt, und einer radial äußeren Wand 4, zudem umfassend einen Hohlraum 6, der zwischen der radial inneren Wand 3 und der radial äußeren Wand 4 begrenzt ist, wobei die Zusammensetzung in den Hohlraum 6 eingeführt wird.

16. Verfahren zum Kühlen einer elektrischen Maschine, vorzugsweise für die Nutzung im Kfz-Bereich, das die folgenden Schritte umfasst:
(a) Vorbereiten einer elektrischen Maschine 100, umfassend einen Stator 101, der mit einer Wicklung versehen ist, einen Rotor 102, der rotatorisch mit dem Stator assoziiert ist, wobei der Stator im Aufnahmevolumen 5 des hohlen Körpers 2 eines hohlen Kühlgehäuses 1 untergebracht ist, das nach Anspruch 15 erhalten wurde;
(b) Aktivieren der elektrischen Maschine durch Versorgen der Wicklung mit Strom.

17. Verfahren nach Anspruch 16, zudem umfassend den Schritt (a.1) zum Bereitstellen eines Fluidkühlkreislaufs 12 im hohlen Kühlgehäuse, vorzugsweise eines Flüssigkeitskühlkreislaufs, komplementär zum Hohlraum 6.

## Revendications

1. Utilisation d'une composition, comprenant un mélange d'au moins deux cires de MCP ayant des températures de fusion différentes en tant qu'élément permettant d'accumuler la chaleur latente dans des machines électriques, de préférence pour un usage dans l'automobile, ladite composition étant **caractérisée en ce qu'**elle possède une plage de températures de fusion comprise entre 60 et 120 °C.

2. Utilisation selon la revendication 1, dans laquelle ladite plage de température de fusion est comprise entre 70 et 105 °C.

3. Utilisation selon la revendication 1 ou 2, dans laquelle ladite composition comprend un mélange d'au moins deux cires de MCP ayant des températures de fusion différentes, choisies dans le groupe constitué :
- d'une cire dont la température de fusion est comprise entre 60 et 75 °C, de préférence autour de 70 °C (« cire 1 »),
- d'une cire dont la température de fusion est comprise entre 76 et 85 °C, de préférence autour de 80 °C (« cire 2 »),
- d'une cire dont la température de fusion est comprise entre 86 et 102 °C, de préférence autour de 100 °C (« cire 3 »),
- d'une cire dont la température de fusion est comprise entre 103 et 120 °C, de préférence autour de 105 °C (« cire 4 »),
et leurs combinaisons.

4. Utilisation selon l'une quelconque des revendications précédentes, dans laquelle lesdites cires sont choisies dans le groupe constitué :
- d'une cire composée d'hydrocarbures paraffiniques à chaîne droite dont le nombre d'atomes de carbone est compris entre 20 et 50 et dont la température de fusion est comprise entre 60 et 75 °C, de préférence autour de 70 °C (« cire 1 ») ;
- d'une cire de Fischer-Tropsch entièrement hydrogénée, composée de chaînes d'hydrocarbures principalement droites, d'un poids moléculaire moyen compris entre 500 et 700 Daltons et d'une température de fusion comprise entre 76 et 85 °C, de préférence autour de 80 °C (« cire 2 ») ;
- d'une cire de Fischer-Tropsch entièrement hydrogénée, composée de chaînes d'hydrocarbures principalement droites, d'un poids moléculaire moyen compris entre 800 et 1000 Daltons et d'une température de fusion comprise entre 86 et 102 °C, de préférence autour de 100 °C (« cire 3 ») ;
- d'une cire composée d'un mélange multicomposant de n-alcanes saturés produit par synthèse Fischer-Tropsch, d'un poids moléculaire moyen compris entre 1 000 et 1 200 Daltons et d'une température de fusion comprise entre 103 et 120 °C, de préférence autour de 105 °C (« cire 4 »).

5. Utilisation selon l'une quelconque des revendications précédentes, dans laquelle ladite composition est une « composition à deux cires » comprenant un mélange de deux cires de MCP ayant des températures de fusion différentes.

6. Utilisation selon la revendication 5, dans laquelle ladite composition comprend un mélange de « cire 2 » avec de la « cire 3 » ou de « cire 2 » avec de la « cire 4 », ladite composition étant **caractérisée en ce qu'**elle possède une plage de températures de fusion comprise entre 76 et 102 °C, de préférence entre 80 et 100 °C, ou entre 76 et 120 °C, de préférence entre 80 et 105 °C.

7. Utilisation selon la revendication 5 ou 6, dans laquelle ladite composition comprend une cire dans une quantité comprise entre 40 et 60 % en poids, de préférence entre 45 et 55 % en poids, et l'autre cire dans une quantité complémentaire comprise entre 40 et 60 % en poids, de préférence entre 45 et 55 % en poids.

8. Utilisation selon l'une quelconque des revendications 1-4, dans laquelle ladite composition est une « composition à trois cires » comprenant un mélange de trois cires de MCP ayant des températures de fusion différentes.

9. Utilisation selon la revendication 8, dans laquelle ladite composition comprend un mélange de « cire 2 », « cire 3 » et « cire 4 », ladite composition étant **caractérisée en ce qu'**elle possède une plage de températures de fusion comprise entre 76 et 120 °C, de préférence entre environ 80 et environ 105 °C.

10. Utilisation selon la revendication 8 ou 9, dans laquelle ladite composition comprend une cire dans une quantité comprise entre 20 et 60 % en poids, de préférence entre 30 et 50 % en poids, et les deux autres cires dans des quantités complémentaires, une cire étant dans une quantité comprise entre 20 et 60 % en poids, de préférence entre 20 et 40 % en poids, et l'autre cire dans une quantité comprise entre 20 et 60 % en poids, de préférence entre 20 et 40 % en poids.

11. Utilisation selon l'une quelconque des revendications 1-4, dans laquelle ladite composition est une « composition à quatre cires » comprenant un mélange de quatre cires de MCP ayant des températures de fusion différentes.

12. Utilisation selon la revendication 11, dans laquelle ladite composition comprend un mélange de « cire 1 », « cire 2 », « cire 3 » et « cire 4 », ladite composition étant **caractérisée en ce qu'**elle possède une plage de températures de fusion comprise entre 60 et 120 °C, de préférence entre environ 70 et environ 105 °C.

13. Utilisation selon la revendication 11 ou 12, dans laquelle ladite composition comprend une première cire dans une quantité comprise entre 10 et 40 % en poids, de préférence entre 15 et 35 % en poids, et les trois autres cires dans des quantités complémentaires, une cire étant dans une quantité comprise entre 10 et 40 % en poids, de préférence entre 15 et 35 % en poids, une autre cire dans une quantité comprise entre 10 et 40 % en poids, de préférence entre 15 et 35 % en poids et l'autre cire dans une quantité comprise entre 10 et 40 % en poids, de préférence entre 15 et 35 % en poids.

14. Utilisation selon l'une quelconque des revendications précédentes, dans laquelle ladite composition est contenue à l'intérieur d'un carter creux de refroidissement pour une machine électrique, de préférence pour un usage dans l'automobile, comprenant :
- un corps creux 2 s'étendant autour de son axe central A et pourvu d'une paroi radialement intérieure 3 délimitant un volume de réception 5 d'une machine électrique 100, et d'une paroi radialement extérieure 4 ;
- une cavité 6 délimitée entre ladite paroi radialement intérieure 3 et ladite paroi radialement extérieure 4.

15. Procédé de fabrication d'un carter creux de refroidissement 1 contenant une composition comprenant un mélange d'au moins deux cires de MCP, ledit procédé comprenant les étapes de :
(i) préparer une composition comprenant un mélange d'au moins deux cires de MCP ayant des températures de fusion différentes en tant qu'élément permettant d'accumuler la chaleur latente, ladite composition étant **caractérisée en ce qu'**elle possède une plage de température de fusion comprise entre 60 et 120 °C, de préférence entre 70 et 105 °C ;
(ii) chauffer la composition jusqu'à ce qu'elle dépasse le point limite supérieur de ladite plage de température de fusion, de préférence jusqu'à une température comprise entre 80 et 160 °C, plus préférablement entre 100 et 140 °C, afin d'obtenir toute la composition à l'état fondu ;
(iii) introduire la composition obtenue à l'étape (ii) et encore à l'état fondu dans un carter creux de refroidissement 1, ledit carter comprenant un corps creux 2 s'étendant autour de son axe central A et pourvu d'une paroi radiale intérieure 3 délimitant un volume de réception 5, et d'une paroi radiale extérieure 4, comprenant de plus une cavité 6 délimitée entre ladite paroi radiale intérieure 3 et ladite paroi radiale extérieure 4, ladite composition étant introduite à l'intérieur de ladite cavité 6.

16. Procédé de refroidissement d'une machine électrique, de préférence pour un usage dans l'automobile, qui comprend les étapes de :
(a) préparer une machine électrique 100 comprenant un stator 101 pourvu d'un enroulement, un rotor 102 associé en rotation audit stator, ledit stator étant logé à l'intérieur du volume de réception 5 du corps creux 2 d'un carter creux de refroidissement 1 obtenu selon la revendication 15 ;
(b) activer ladite machine électrique en alimentant l'enroulement en courant.

17. Procédé selon la revendication 16, comprenant de plus l'étape (a.1) consistant à prévoir, dans ledit carter creux de refroidissement, un circuit de refroidissement 12 de fluide, de préférence un circuit de refroidissement de liquide, complémentaire de la cavité 6.
